(19) Europäisches Patentamt
European Patent Office
Office européen des brevets

(11) **EP 3 480 710 A1**

(12) **EUROPEAN PATENT APPLICATION**

(43) Date of publication:
**08.05.2019 Bulletin 2019/19**

(51) Int Cl.:
**G06F 17/16** (2006.01)          **G06F 7/53** (2006.01)
**G06F 9/30** (2018.01)

(21) Application number: **17199898.2**

(22) Date of filing: **03.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy**
**02610 Espoo (FI)**

(72) Inventors:
• **AIROLDI, Roberto**
  **02610 Espoo (FI)**
• **JIVANESCU, Mihaela**
  **Korbeek-lo (BE)**
• **GUEVORKIAN, David**
  **33450 Ylöjärvi (FI)**
• **KAJIRU, Kajiru**
  **02610 Espoo (FI)**
• **ROUNIOJA, Kim**
  **90620 Oulu (FI)**

(74) Representative: **Nokia EPO representatives**
**Nokia Technologies Oy**
**Karaportti 3**
**02610 Espoo (FI)**

(54) **COMPUTER ARCHITECTURES AND INSTRUCTIONS FOR MULTIPLICATION**

(57) A method and apparatus is described, comprising: receiving potential partial products for a first element of a first input vector or scalar; receiving a second input, wherein the second input is a scalar, a vector or a matrix; and for each term of an output vector or scalar: selecting one or more of the potential partial products based on a term of the second input corresponding to the respective term of the output vector or scalar to provide a set of selected partial products; and shifting and adding the selected partial products to the respective term of the output vector or scalar.

Fig. 3

**Description**

**Field**

The present specification relates to computer architectures and to instructions for multiplications.

**Background**

Scalar-vector, matrix-vector, or matrix-matrix multiplications, are used in a wide variety of applications. Complex number multiplication is a particular case of (real) matrix-vector multiplication and is used in many communication systems. Improvements in apparatus and methods for multiplication can bring large overall benefits at a system level.

**Summary**

In a first aspect, this specification describes a method comprising: receiving potential partial products for a first element of a first input, wherein the first input is a vector or a scalar; receiving a second input, wherein the second input is a scalar, a vector or a matrix; and for each term of an output vector or scalar: selecting one or more of the potential partial products based on a term of the second input corresponding to the respective term of the output vector or scalar to provide a set of selected partial products; and shifting and adding the selected partial products to the respective term of the output vector or scalar. The method may perform at least a part of at least one of scalar-vector, matrix-vector and matrix-matrix multiplication.

The first aspect may further comprise generating the potential partial products for the first element of the first input.

The first aspect may further comprise storing said potential partial products in a potential partial products register. The stored potential partial product may be utilized in a multiplication if a common term of parallel multiplications is a constant.

The first aspect may comprise repeating the receiving potential partial products, selecting and shifting and adding steps for each element of the first input.

At least one element of the first input may be a complex number having a real part and an imaginary part. Alternatively, or in addition, at least one element of the second input is a complex number having a real part and an imaginary part.

The output vector or scalar may be stored in an output register. The first aspect may further comprise initialising the output register.

The first aspect may further comprise generating the potential partial products in response to a generate potential partial products instruction.

The first aspect may further comprise shifting and adding the selected partial products in response to a parallel selection and addition instruction.

In a second aspect, this specification describes an apparatus configured to perform any method as described above with reference to the first aspect.

In a third aspect, this specification describes computer readable instructions which, when executed by computing apparatus, causes the computing apparatus to perform any method as described above with reference to the first aspect.

In a fourth aspect, this specification describes a computer-readable medium having computer-readable code stored thereon, the computer readable code, when executed by at least one processor, causes performance of: receiving potential partial products for a first element of a first input, wherein the first input is a vector or scalar; receiving a second input, wherein the second input is a scalar, a vector or a matrix; and for each term of an output vector or scalar: selecting one or more of the potential partial products based on a term of the second input corresponding to the respective term of the output vector or scalar to provide a set of selected partial products; and shifting and adding the selected partial products to the respective term of the output vector or scalar.

In a fifth aspect, this specification describes an apparatus comprising at least one processor; and at least one memory including computer program code which, when executed by the at least one processor, causes the apparatus to: receive potential partial products for a first element of a first input, wherein the first input is a vector or scalar; receive a second input, wherein the second input is a scalar, a vector or a matrix; and for each term of an output vector or scalar: select one or more of the potential partial products based on a term of the second input corresponding to the respective term of the output vector or scalar to provide a set of selected partial products; and shift and add the selected partial products to the respective term of the output vector or scalar.

In a sixth aspect, this specification describes an apparatus comprising means for receiving potential partial products for a first element of a first input, wherein the first input is a vector or scalar; means for receiving a second input, wherein the second input is a scalar, a vector or a matrix; and for each term of an output vector or scalar: means for selecting one or more of the potential partial products based on a term of the second input corresponding to the respective term of the output vector or scalar to provide a set of selected partial products; and means for shifting and adding the selected partial products to the respective term of the output vector or scalar.

**Brief description of the drawings**

Example embodiments will now be described, by way of non-limiting examples, with reference to the following schematic drawings, in which:

Figure 1 is a block diagram of an apparatus for performing matrix-vector multiplications;
Figure 2 is a block diagram of an apparatus for performing multiplications;
Figure 3 is a block diagram of a module in accordance with an exemplary embodiment;
Figure 4 is a flow chart of an algorithm in accordance with an exemplary embodiment;
Figure 5 is a flow chart of an algorithm in accordance with an exemplary embodiment;
Figure 6 is a flow chart of an algorithm in accordance with an exemplary embodiment;
Figure 7 is a block diagram of a system according to an example embodiment;
Figures 8a and 8b show tangible media, respectively a removable memory unit and a company disc (CD) storing computer-readable code which when run by a computer perform operations according to embodiments;
Figure 9 is a block diagram showing an exemplary system in accordance with an exemplary embodiment; and
Figure 10 is a block diagram of a module in accordance with an exemplary embodiment.

**Detailed description**

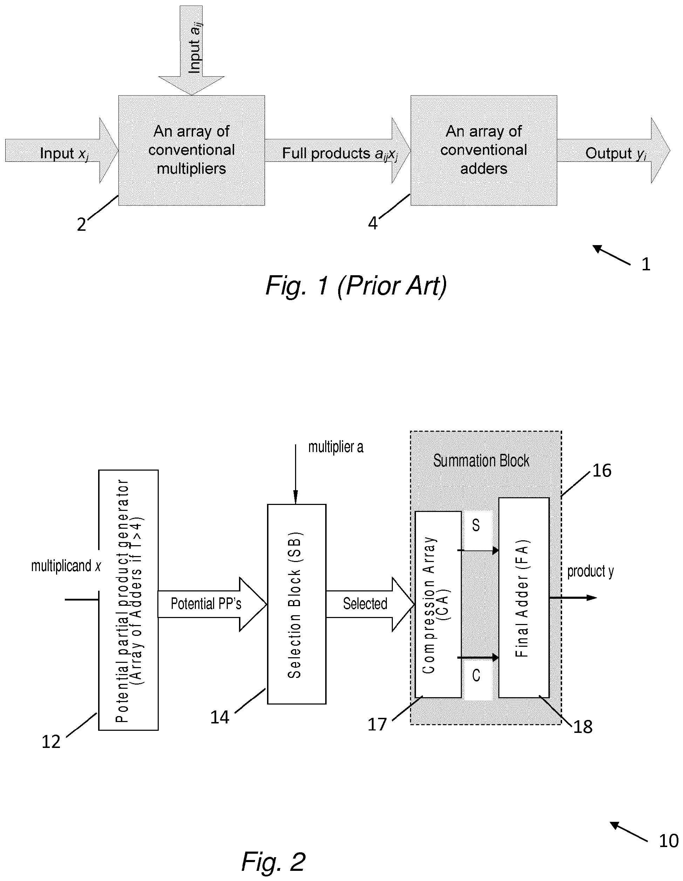

Figure 1 is an example block diagram of an apparatus, indicated generally by the reference numeral 1, for performing matrix-vector multiplications. The apparatus 1 comprises an array of multipliers 2 and an array of adders 4.
The multiplication of a matrix $A = \{a_{i,j}\}$, $i = 0, ..., N - 1$, $j = 0, ... M - 1$ with complex or real-valued entries $a_{i,j}$ to a vector $\boldsymbol{x} = [x_0, ..., x_{M-1}]$ with complex or real-valued entries $x_j$ results in the vector $\boldsymbol{y} = [y_0, ..., y_{N-1}]$ with entries $y_i$ defined by:

$$y_i = \sum_{j=0}^{M-1} a_{i,j}\, x_j, i = 0, ..., N - 1.$$

Equivalently, in matrix notation, this may be presented as:

$$\begin{bmatrix} y_0 \\ y_1 \\ \vdots \\ y_{N-1} \end{bmatrix} = \begin{bmatrix} a_{0,0} & a_{0,1} & \cdots & a_{0,M-1} \\ a_{1,0} & a_{1,1} & \cdots & a_{1,M-1} \\ \vdots & \vdots & \ddots & \vdots \\ a_{N-1,0} & a_{N-1,1} & \vdots & a_{N-1,M-1} \end{bmatrix} \begin{bmatrix} x_0 \\ x_1 \\ \vdots \\ x_{M-1} \end{bmatrix}$$

$$= \begin{bmatrix} a_{0,0} \\ a_{0,1} \\ \vdots \\ a_{N-1,0} \end{bmatrix} x_0 + \begin{bmatrix} a_{0,1} \\ a_{1,1} \\ \vdots \\ a_{N-1,1} \end{bmatrix} x_1 + \cdots + \begin{bmatrix} a_{0,M-1} \\ a_{1,M-1} \\ \vdots \\ a_{N-1,M-1} \end{bmatrix} x_{M-1}$$

In the apparatus 1, the array of multipliers 2 receives a first input $a_{ij}$ and a second input $x_j$. Thus, the array of multipliers 2 provides an output $a_{ij}x_j$. By summing the output of the array of multipliers 2 for each value of $j$, the output of the array of adders provides the output $y_i$, which, as noted above, in given by:

$$y_i = \sum_{j=0}^{M-1} a_{i,j}\, x_j, i = 0, ..., N - 1.$$

One aspect of this specification is to provide an efficient hardware architecture for computing the outputs $y_i$ for a given set of inputs $a_{i,j}$ and $x_j$, $i = 0, ..., N - 1$, $j = 0, ... M - 1$.
The principles described here are also relevant to complex multiplication. Consider the product $y = a.x$, where $a = a_{re} + \sqrt{-1}a_{im}$ and $x = x_{re} + \sqrt{-1}x_{im}$:

$$y = a_{re}x_{re} + \sqrt{-1}a_{re}x_{im} + \sqrt{-1}a_{im}x_{re} + \sqrt{-1}a_{im}\sqrt{-1}x_{im}$$

which can be reduced to:

$$y = a_{re}x_{re} - a_{im}x_{im} + \sqrt{-1}(a_{re}x_{im} + a_{im}x_{re})$$

Thus:

$$y_{re} = a_{re}x_{re} - a_{im}x_{im};$$

and

$$y_{im} = a_{re}x_{im} + a_{im}x_{re}$$

It follows that the real and imaginary parts of the product $y = y_{re} + \sqrt{-1}y_{im}$ can be computed as components of the output vector of the matrix-vector multiplication as follows:

$$\begin{bmatrix} y_{re} \\ y_{im} \end{bmatrix} = \begin{bmatrix} a_{re} & -a_{im} \\ a_{im} & a_{re} \end{bmatrix} \begin{bmatrix} x_{re} \\ x_{im} \end{bmatrix}$$

Accordingly, providing an efficient hardware architecture for performing vector-matrix multiplication may also provide an efficient hardware architecture for the multiplication of complex numbers.

There are many applications or use cases where the principles described herein may be utilized. These include digital beamforming on base stations, where antenna streams are multiplied to a beamforming matrix. That is, at the rate of AxC sample arrival, each is multiplied by a complex-valued matrix. The entries of the matrix are regularly updated based on dynamically changing channel properties . This involves a number of complex multiplications. Clearly, beamforming is a demanding operation that may benefit from an efficient hardware implementation. Many other use cases exist, in many fields of technology, where the principles described herewith might be applicable. There is also the example of vectoring in DSL technology where the precoder matrix is multiplied with the data vector for each tone and each symbol. This multiplication is at the centre of the vectoring technique, crucial to obtain high throughputs.

The basic building block used in the prior art to implement a matrix-vector multiplication is a multiplier unit followed by an adder unit that together form a MAC (multiply-accumulate) unit. Figure 2 is a block diagram of an apparatus, indicated generally by the reference numeral 10, of an exemplary multiplier unit that can be used for performing multiplications or MAC operations when followed by an adder unit that implements additions. The apparatus 10 may comprise a potential partial product generator 12, a selection block 14 and a summation block 16. The summation block 16 may include a compression array 17 and a final adder 18.

In the partial product generator 12, all potential partial products (PPPs) of the multiplicand $x$ according to multiplication radix $T$ are obtained. For example, in the case of a non-recoded radix-8 multiplier, the list of potential partial products is {$-x+C(n)$, 0, x, 2x, 3x=x+2x, 4x, 5x=x+4x, 6x=2(x+2x), 7x=8x-x}. Each of these values may be obtained in one addition and/or in one/two shift operation/s. The first block may be implemented as an array of adders.

The selection block 14 selects the partial product with respect to $logT$-bit slices of the multiplier $a$. For example, if three least significant bits of $a$ form the number $5=(110_2)$, the partial product $5x$ may be selected for that slice. If the preceding three bits form the number $2 = (010_2)$ then the partial product $2x$ will be selected and then will be shifted by three positions to the left (since this is the second least significant slice), and so on.

The summation block 16 sums up the selected partial products (PPs). The summation block 16 may consist of a compression array 17 followed by a final adder 18. Note that compared to standard Booth recoded radix-4 multipliers, there are fewer partial products to sum up. Therefore, the summation block 16 may be significantly simplified. The price for that is the increased complexity of the potential partial product generator 12. However, in all the cases (in particular, the case of matrix-vector multiplication) where the multiplicand $x$ is multiplied to a number of multipliers $a_i$, $i = 0, ... M - 1$, the partial product generator 12 or its result may be shared among $M$ multipliers (or multiplication operations if they are implemented serially) since the list of potential partial products for $x$ is the same in all the multiplications $a_i$, $i = 0, ...$

*M* - 1. This may significantly reduce the area, the power consumption and/or execution time of the design.

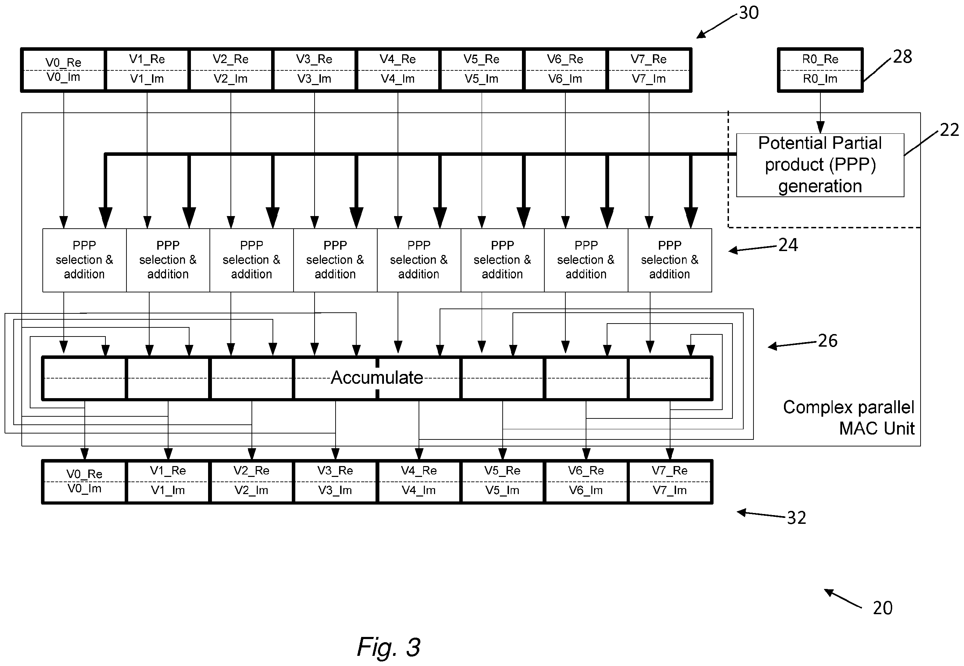

Figure 3 is a block diagram of a module, indicated generally by the reference numeral 20, in accordance with an exemplary embodiment

The module 20 comprises a potential partial product (PPP) generator 22, a plurality of PP selection and addition modules 24 and a plurality of accumulate modules 26. (Note that the partial product selection and addition modules 24 may be referred to as PP selection and summation modules, which may be clearer since the 'summation' typically includes more than two addends.)

The PPP generator 22 receives an input 28 from which potential partial products are generated. The potential partial products generated by the PPP generator 22 are provided to an input of each of the PP selection and addition modules 24. The other input of each PP selection and addition module is provided by a respective value of an input vector 30. The output of each PP selection and addition module is provided to a respective one of the accumulate modules 26. Each accumulate module accumulates the value of a respective component of an output vector 32, which may or may not be the same as the input 30. (In some implementations, the PPP generator 22 may be omitted, as discussed further below.)

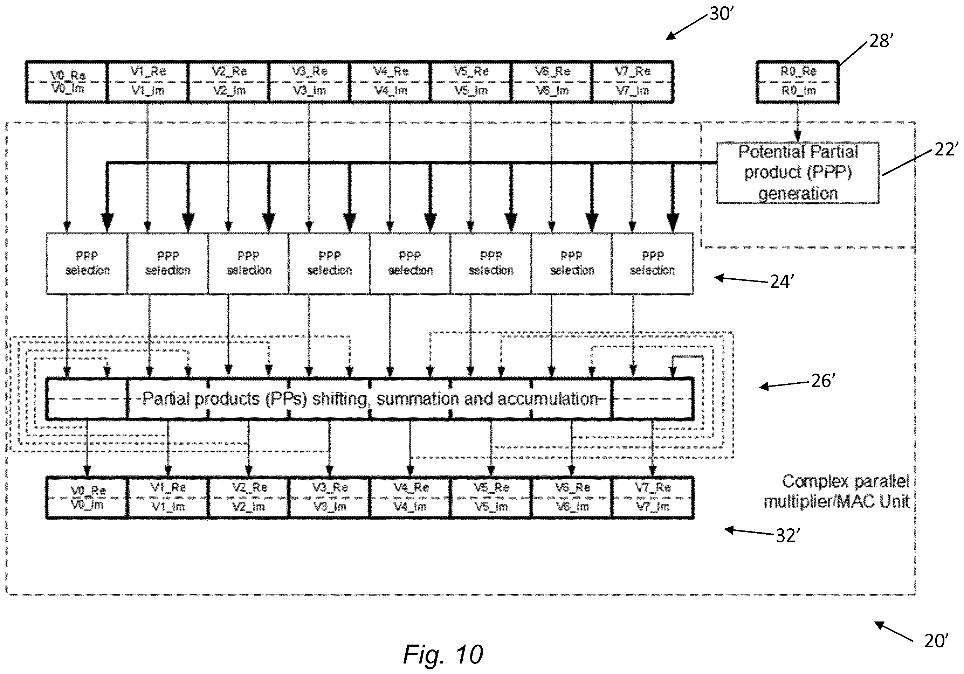

Figure 10 is a block diagram of a module, indicated generally by the reference numeral 20', in accordance with an exemplary embodiment. The module 20' is a variant of the module 20 described above with reference to Figure 3.

The module 20' comprises an optional potential partial product (PPP) generator 22', a plurality of PP selection modules 24' and a plurality of PP shifting, summation and accumulation modules 26'.

Where used, the PPP generator 22' receives an input 28' from which potential partial products are generated. The potential partial products generated by the PPP generator 22' are provided to an input of each of the PP selection modules 24'. The other input of each PP selection module is provided by a respective value of an input vector 30'. The output of each PP selection module is provided to a respective one of the PP shifting, summation and accumulation modules 26'. Each one of the PP shifting, summation and accumulation modules accumulates the value of a respective component of an output vector 32', which may or may not be the same as the input 30'.

As described above, the multiplication of a matrix $A = \{a_{i,j}\}$, $i = 0, ..., N$ - 1, $j = 0, ... M$ - 1 with complex or real-valued entries $a_{i,j}$ to a vector $\boldsymbol{x} = [x_0 ,..., x_{M-1}]$ with complex or real-valued entries $x_j$ results in the vector $\boldsymbol{y} = [y_0 ,..., y_{N-1}]$ with entries $y_i$ defined by:

$$y_i = \sum_{j=0}^{M-1} a_{i,j}\, x_j, i = 0, \dots, N-1.$$

Opening up the equation for $y_i$ above, we obtain:

$$y_0 = a_{0,0} \cdot x_0 + a_{0,1} \cdot x_1 + a_{0,2} \cdot x_2 + \dots + a_{0,M-1} \cdot x_{M-1}$$

$$y_1 = a_{1,0} \cdot x_0 + a_{1,1} \cdot x_1 + a_{1,2} \cdot x_2 + \dots + a_{0,M-1} \cdot x_{M-1}$$

...

$$y_{N-1} = a_{N-1,0} \cdot x_0 + a_{N-1,1} \cdot x_1 + a_{N-1,2} \cdot x_2 + \dots + a_{N-1,M-1} \cdot x_{M-1}$$

The computation of $y_i$, involves common terms $x_j$ across the different $y_i$. As an example, the first multiplication for the computation of any $y_i$ always involves the input vector element $x_0$, the second multiplication always involves the term $x_1$, and so forth until the last term of the multiply-accumulate function that involves the term $x_{M-1}$. Therefore, it is possible to share one of the multiplicands across parallel complex MAC units.

An important benefit of this ordering of operations, is that a single set of potential partial products of each element $x_j$ can be re-used in the N different parallel multiplications, using $a_{ij}$ (i = 0, .., N-1) for the partial product selection. Thus, the utilization of partial products may allow sharing not just one of the input terms of the complex multiplications but also part of the MAC itself.

In fact, as described in the previous section and visualized by Figures 3 and 10, a partial product based multiplier may be composed of two distinct units: the potential partial products generation unit 22 and 22' on the one hand, and the partial products selection, summation and accumulation modules 24, 24' 26 and 26' on the other hand. This division may lead to implementation advantages, when considering particular operating conditions (e.g. a common multiplicand). In fact, in such a scenario, the generation of potential partial products for the common multiplicand can be computed just once and reutilized across the different (possibly parallel) instances of the complex MACs. From an implementation point of view, this means that only a single potential partial product generation unit 22, 22' may need be instantiated in the design. It is to be noted that this is independent from the actual number of parallel complex MACs instantiated in the design. Finally, the N parallel MACs are reduced to a common potential partial product generation unit 22, 22' and a set of N partial product selection, summation and accumulate modules 24, 24', 26, 26'.

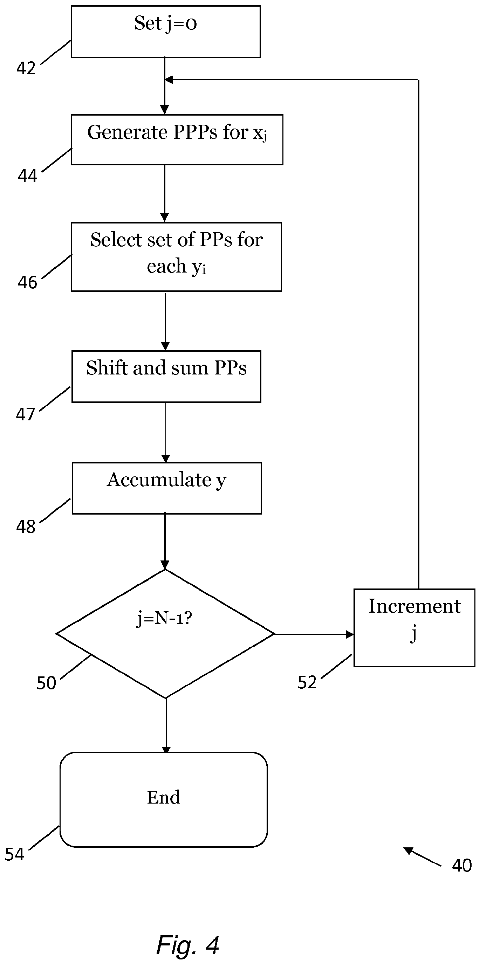

Figure 4 is a flow chart of an algorithm, indicated generally by the reference numeral 40, in accordance with an exemplary embodiment.

The algorithm 40 shows a multiply-accumulate function that can be implemented using the modules 20 or 20'. By way of example, the algorithm 40 generates $y = A \cdot x$, where $A = \{a_{i,j}\}$, $i = 0, ..., N - 1$, $j = 0, ... M - 1$ and $x = [x_0 ,..., x_{M-1}]$.

The algorithm 40 starts at operation 42 where j is set to zero. Next, at operation 44, the potential partial product (PPP) generator 22 or 22' is used to generate the potential partial products (PPPs) for $x_j$ ($x_0$ in this instance). The PPPs for $x_0$ are provided to each of the PPP selection and addition modules 24 or PPP selection modules 24'.

The algorithm 40 moves to operation 46, where the appropriate set of partial products (PPs) is selected (typically but not necessarily in parallel) for each output value $y_i$ by the respective one of the PP selection and addition modules 24 (or PP selection modules 24'). By way of example, the first of the PP selection and addition module (or PP selection module) receives the multiplier $a_{0,0}$ from the register 30 or 30' and selects the appropriate set of partial products (equating to $a_{0,0}.x_0$) from the PPPs received from the PPP generator 22 or 22'. At operation 47, the sum of appropriately shifted selected PPs is generated as the product $a_{0,0}.x_0$ that is provided to operation 48 of the algorithm 40.

At operation 48, the outputs $y_i$ are accumulated on the basis of the products obtained from partial products selected for $y_i$ at operation 47 from the set of PPs. Thus, for the first the output $y_0$, the accumulator 26 or module 26' adds the product $a_{0,0}.x_0$ to the value stored within the register 32 or 32' (that was set to 0 at the start of the algorithm).

The algorithm 40 then moves to operation 50, which determines whether $j = N - 1$. If so, the algorithm 40 terminates at termination operation 54; otherwise, the algorithm 40 moves to operation 52.

Assuming that $j = 0$ and $N > 1$, the operation 50 is answered in the negative in the example above so that the algorithm 40 moves to operation 52. At operation 52, the variable $j$ is incremented (to 1 in this example) and the algorithm returns to operation 44.

In this example, the PPPs are then generated for $x_1$ (operation 44) and the appropriate PPs are selected at operation 46. Taking the first PP selection and addition module 24 (or the first PP selection module 24') again, that module receives the multiplier $a_{0,1}$ from the register 30 or 30' and selects the appropriate set of partial products (equating to $a_{0,1}.x_1$) from the PPPs received from the PPP generator 22. The sum of appropriately shifted selected PPs is the product $a_{0,1}.x_1$ (operation 47) that is provided to operation 48 of the algorithm 40.

At operation 48, the outputs $y_i$ are accumulated on the basis of the shifted and summed PPs (operation 47). Thus, at this operation, for the first output $y_0$, , the accumulator 26 or module 26' adds that product ($a_{0,1}.x_1$) to the value stored within the register 32 (i.e. the value $a_{0,0}.x_0$) stored in the previous iteration.

The algorithm implements similar operations for all the outputs $y_i$, $i = 0, ..., N - 1$, using the same set of PPPs generated for each input $x_j$, $j = 0, ..., M - 1$

The algorithm 40 is therefore repeated until all the multiply-accumulate operations are complete and the output register 32 contains the output of the multiplication function.

The modules 20 and 20' may be used to implement a number of functions, as discussed further below.

As described above, in one form of the invention, the output y is a product of matrix-vector multiplication:

$$\begin{bmatrix} y_0 \\ y_1 \\ \vdots \\ y_{N-1} \end{bmatrix} = \begin{bmatrix} a_{0,0} & a_{0,1} & ... & a_{0,M-1} \\ a_{1,0} & a_{1,1} & \cdots & a_{1,M-1} \\ \vdots & \vdots & \ddots & \vdots \\ a_{N-1,0} & a_{N-1,1} & \vdots & a_{N-1,M-1} \end{bmatrix} \begin{bmatrix} x_0 \\ x_1 \\ \vdots \\ x_{M-1} \end{bmatrix}$$

$$= \begin{bmatrix} a_{0,0} \\ a_{0,1} \\ \vdots \\ a_{N-1,0} \end{bmatrix} x_0 + \begin{bmatrix} a_{0,1} \\ a_{1,1} \\ \vdots \\ a_{N-1,1} \end{bmatrix} x_1 + \cdots + \begin{bmatrix} a_{0,M-1} \\ a_{1,M-1} \\ \vdots \\ a_{N-1,M-1} \end{bmatrix} x_{M-1}$$

The vector y is calculated by first calculating the values of y dependent on $x_0$, then adding the values of y dependent on $x_1$ up to the values of y dependent on $x_{M-1}$. This is a way to keep constant one of the factors.

Also as outlined above, complex multiplication can be implemented as vector-matrix multiplication as follows:

$$\begin{bmatrix} y_{re} \\ y_{im} \end{bmatrix} = \begin{bmatrix} a_{re} & -a_{im} \\ a_{im} & a_{re} \end{bmatrix} \begin{bmatrix} x_{re} \\ x_{im} \end{bmatrix}$$

Accordingly, the apparatus 20 and 20' can readily be used for implementing complex multiplication.

The module 20 described above with reference to Figure 3 and the module 20' described above with reference to Figure 10 are flexible modules that may be controlled using a number of different operations or instructions. These instructions could be implemented as instruction set architecture (ISA) instructions, microcode or digital electrical signals received by the module. Alternatively or in addition, these operations may be instigated by a processing unit upon receipt of certain data types or locating said data types within an attached memory. It should also be noted that these instructions or operations may be encompassed as a sub-instruction or sub-operation within another instruction or operation. By way of example, "generate potential partial products", "parallel selection and addition" and "multiply-accumulate" instructions are described below.

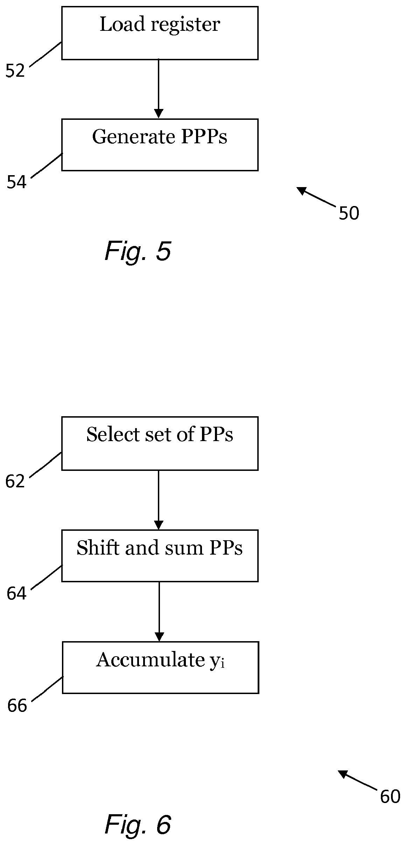

Figure 5 is a flow chart of an algorithm, indicated generally by the reference numeral 50, in accordance with an exemplary embodiment. The algorithm 50 is an exemplary implementation of the "generate potential partial products" instruction described above. The generate potential partial products instruction can be implemented, for example, using the modules 20 or 20' described above.

The algorithm 50 starts at operation 52 where the register 28 or 28' is set to a desired value. Next, at operation 54, the potential partial product (PPP) generator 22 or 22' is used to generate the potential partial products (PPPs) for the value in the register 28 or 28'.

Thus, the algorithm 50 can be used to generate potential partial products for a common multiplier. These potential partial products can be stored into a dedicated set of registers within the data-path and could be reutilized across any number of multiplications, if the common term of the parallel multiplications is a constant (e.g. a filter coefficient).

Figure 6 is a flow chart of an algorithm, indicated generally by the reference numeral 60, in accordance with an exemplary embodiment. The algorithm 60 is an exemplary implementation of the parallel PP selections and additions instruction described above.

The algorithm 60 starts at operation 62, where an appropriate outputs of the PPP generation module 22 or 22' are selected by modules 24 or 24' on the basis of the respective input received from the register 30 or 30'. Thus, the operation 62 selects the appropriate set of partial products (PPs).

At operation 64, the selected partial products are shifted and summed as appropriate. This may be implemented within the PP selection and addition module 24 or the PP shifting, summation and accumulation module 26' described above.

At operation 66, the results of the shifting and summation process are accumulated for each output $y_i$.

Thus, the algorithm 60 can be used for parallel selections and additions based on values stored within the register 30 or 30'.

As noted above, the algorithm 60 can be implemented using either the module 20 or the module 20' described above. In the module 20, the PP selection (operation 62) and shifting and summation (operation 64) functions of the algorithm 60 are implemented in the same module (the module 24). In the module 20', the shift and summation (operation 64) and accumulation (operation 66) functions of the algorithm 60 are carried out in the same module (the module 26'). In yet a further variant, the PP selection (operation 62), shifting and summation (operation 64), and accumulation (operation 64) functions of the algorithm 60 may each be implemented in different modules.

It will be apparent that the algorithms 50 and 60 described above may be combined in order to implement a full multiplier (in accordance with algorithm 40). However, it is important to note that in embodiments in which the PPPs are provided (for example, if they are stored within a register), the algorithm 50 may be omitted. Thus, the provision of separate functions may provide efficiencies in the implementation of multiplications. It should also be noted that the PPP generation 22 or 22' may be omitted from the systems 20 and 20' (for example, if the potential partial products do not need to be generated).

Furthermore, a full multiply-accumulate function may be implemented. Such a function may take the form of the algorithm 40 described above with reference to Figure 4 (with that algorithm being an exemplary implementation of the multiply-accumulate instruction described above). Alternatively, the algorithms 50 and 60 may be combined to provide the function.

For completeness, it is noted that the principles described herein can be applied to different types of multiplication, such as real-valued or complex-valued scalar-scalar, scalar-vector, vector-vector and matrix-vector multiplication.

The modules 20 and 20' show examples of how the partial product based complex MAC unit works in the case of a vector register V of 8 elements. In the figures, it is assumed that the input and output data are stored in the same vector register file V. However, the systems may allow the utilization of different registers for reading and writing. The same applies for the reading of the scalar register: the systems do not impose to utilize a specific complex register of the register file; the utilization of Ro serves just to illustrate the functionality.

The modules 20 and 20' are shown having registers including both real and imaginary parts. This enables the modules 20 and 20' to manipulate complex inputs and outputs. The multiplication principles of the present invention can be readily applied to both real multiplication and complex multiplication.

To assess the benefits of the designs described in this specification, a first assessment was made to quantify the advantages offered by the implementation of complex numbers multiplications via the utilization of the partial product method. In particular, a radix-8 implementation was utilized. However, similar benefits may be obtained with other radices (e.g. radix-4 or radix-16). As reference design, a standard complex multiplier (4 real multiplications, 2 real additions) was utilized.

Two different example application specific ISP processors (ASIPs) were designed starting from a common baseline. The first design included a complex multiplier based on partial product generation while the second one included a complex multiplier based on the reference design. It was found that the partial product multiplication design was roughly 25% smaller than the reference design. It was also found that the proposed complex multiplier reduced by roughly a 40% the total power consumption compared to the reference design.

The principles of the specification may be implemented in a number of ways, such as using an application specific ISP processors (ASIPs) as indicated above. For example, a very long instruction word (VLIW) ASIP may be used. Alternatively a single-input multiple data (SIMD) processor may be used. The skilled person will be aware of many other potential implementations, such as using application specific integrated circuits (ASICs), digital signal processors (DSPs), general purpose processors (GPPs) etc.

The principles of the specification may also be embodied within integrated circuit designs. These designs could be any or several of hardware description language code, a netlist and a silicon layout. Each type of design brings with it distinct advantages and disadvantages. A design provided as hardware description language code provides a great deal of flexibility allowing the design to be easily implemented and modified within a wide range of integrated circuits such as system-on-chips or processors. Furthermore, hardware description language code allows such designs to be easily prototyped using FPGAs. This flexibility, however, comes at the expense of predictability in timing performance and area of the chip. In contrast, designs provided as silicon layouts are significantly more predictable but less flexible. Meanwhile, netlists provide some degree of flexibility and some degree of predictability.

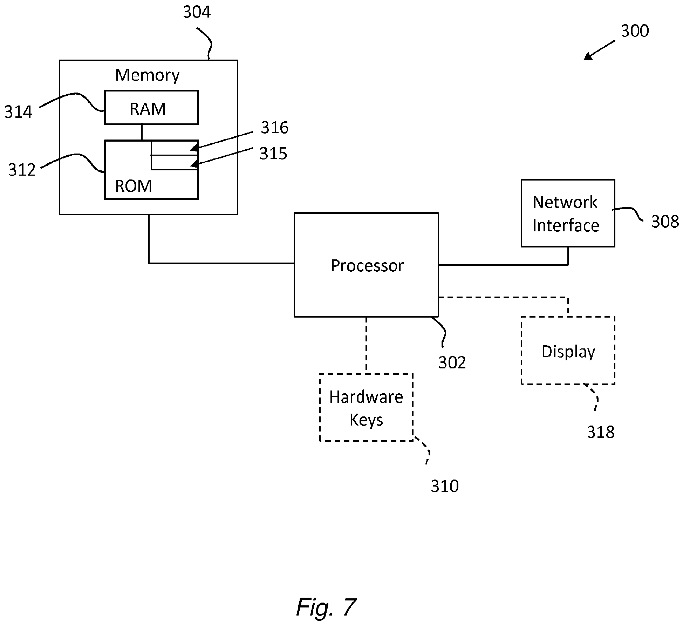

For completeness, Figure 7 is an example schematic diagram of components of one or more of the modules described previously, in accordance with an exemplary embodiment, which hereafter are referred to generically as processing systems 300. A processing system 300 may comprise a processor 302, a memory 304 closely coupled to the processor and comprised of a RAM 314 and ROM 312, and, optionally, hardware keys 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 40, 50 and/or 60.

The processor 302 may take any suitable form. For instance, it may be a microcontroller, plural microcontrollers, a processor, or plural processors.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there. The communication may be processed through the network interface 308.

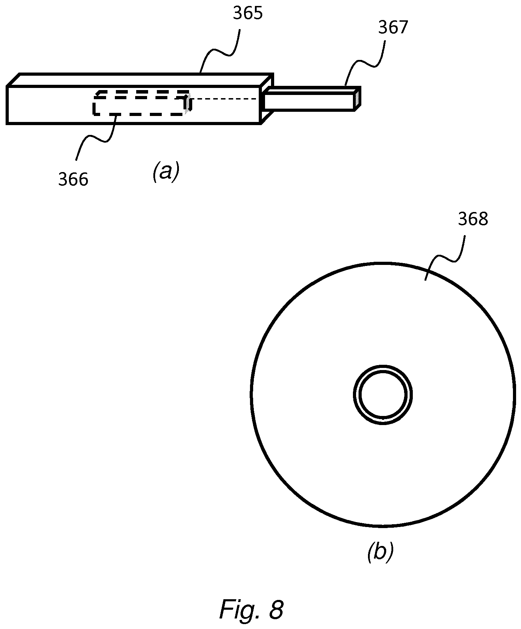

Figures 8a and 8b show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

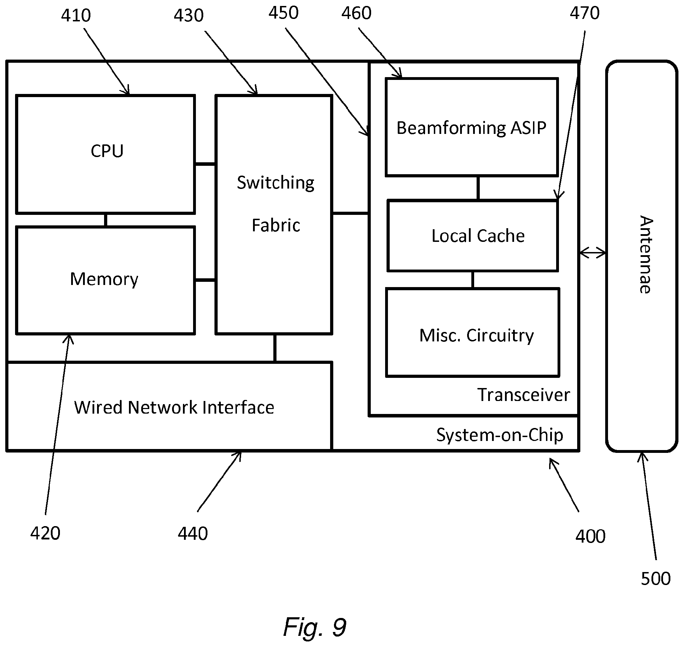

Figure 9 shows an exemplary system within which the invention could be implemented. The System-on-Chip 400 is a networking system containing both wired and wireless interfaces. The CPU 410 of the system is responsible for general computation. A memory 420 is provided to store either or both of temporary and persistent data within the system. Both the CPU 410 and the memory 420 have access to the switching fabric 430 which allows them to communicate with the wired network interface 440 and the transceiver 450. The wired network interface 440 could be e.g. any of an interface to a backbone telephone or internet network, an Ethernet network or a cable network. The transceiver 450 is designed to transmit and receive some type of wireless signal and hence enable some form of wireless network. This wireless network could be e.g. any of a cellular telephone network, such as 3G or 4G, or a wireless LAN network, such as 802.11n or 802.11ac. The transceiver 450 communicates with such a network by way of antennae 500.

The exemplary transceiver 450 includes a Beamforming ASIP 460 that can be used to perform beamforming (one of many exemplary uses of the principles described herein). Beamforming uses multiple antennae to better transmit to and from, respectively, devices in given locations. In this way, wireless networking performance can be improved. The Beamforming ASIP 460 necessarily performs a large number of matrix-vector multiplications. Including multipliers described herein within this ASIP can greatly improve the performance of the ASIP for a given level of power consumption. In addition to this ASIP, the transceiver 450 includes both a local cache 470 and other miscellaneous circuitry 480. These enable the general functioning of the transceiver for transmitting and receiving signals.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 4 to 6 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

**Claims**

**1.** A method comprising:

receiving potential partial products for a first element of a first input, wherein the first input is a vector or a scalar;
receiving a second input, wherein the second input is a scalar, a vector or a matrix; and
for each term of an output vector or scalar:

selecting one or more of the potential partial products based on a term of the second input corresponding to the respective term of the output vector or scalar to provide a set of selected partial products; and shifting and adding the selected partial products to the respective term of the output vector or scalar.

2. The method as claimed in claim 1, further comprising generating the potential partial products for the first element of the first input.

3. The method as claimed in claim 1 or claim 2, further comprising storing said potential partial products in a potential partial products register.

4. The method as claimed in claim 3, further comprising utilizing the stored potential partial products in a multiplication if a common term of parallel multiplications is a constant.

5. The method as claimed in any one of the preceding claims, further comprising repeating the receiving potential partial products, selecting and shifting and adding steps for each element of the first input.

6. The method as claimed in any one of the preceding claims, wherein at least one element of the first input is a complex number having a real part and an imaginary part.

7. The method as claimed in any one of the preceding claims, wherein at least one element of the second input is a complex number having a real part and an imaginary part.

8. A method as claimed in any one of the preceding claim, wherein the output vector or scalar is stored in an output register.

9. A method as claimed in claim 8, further comprising initialising the output register.

10. The method as claimed in any one of the preceding claims, wherein the method performs at least a part of at least one of scalar-vector, matrix-vector and matrix-matrix multiplication.

11. The method as claimed in any one of the preceding claims, further comprising generating the potential partial products in response to a generate potential partial products instruction.

12. The method as claimed in any one of the preceding claims, further comprising shifting and adding the selected partial products in response to a parallel selection and addition instruction.

13. Apparatus configured to perform the method of any preceding claim.

14. Computer readable instructions which, when executed by computing apparatus, causes the computing apparatus to perform the method of any of claims 1 to 12.

15. A computer-readable medium having computer-readable code stored thereon, the computer readable code, when executed by at least one processor, causes performance of:

receiving potential partial products for a first element of a first input, wherein the first input is a vector or a scalar;
receiving a second input, wherein the second input is a scalar, a vector or a matrix; and
for each term of an output vector or scalar:

selecting one or more of the potential partial products based on a term of the second input corresponding to the respective term of the output vector or scalar to provide a set of selected partial products; and
shifting and adding the selected partial products to the respective term of the output vector or scalar.

*Fig. 1 (Prior Art)*

*Fig. 2*

*Fig. 3*

Fig. 4

Load register

52

Generate PPPs

54

50

*Fig. 5*

Select set of PPs

62

Shift and sum PPs

64

Accumulate $y_i$

66

60

*Fig. 6*

*Fig. 7*

365

367

366

*(a)*

368

*(b)*

*Fig. 8*

Fig. 9

*Fig. 10*

EP 3 480 710 A1

Europäisches
Patentamt

European
Patent Office

Office européen
des brevets

**EUROPEAN SEARCH REPORT**

Application Number

EP 17 19 9898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/042599 A1 (NOKIA CORP [FI]; GUEVORKIAN DAVID [FI]; LAUNIAINEN AKI [FI]; LIUHA PET) 21 May 2004 (2004-05-21) * pages 24, 25, 28 and 29 * ----- | 1-15 | INV. G06F17/16 G06F7/53 G06F9/30 |
| X | WO 2004/042554 A1 (NOKIA CORP [FI]; GUEVORKIAN DAVID [FI]; LAUNIAINEN AKI [FI]; LIUHA PET) 21 May 2004 (2004-05-21) * pages 18, 19, 25-27 * ----- | 1-15 | |
| A | US 2008/098278 A1 (MATHEW SANU [US] ET AL) 24 April 2008 (2008-04-24) * the whole document * ----- | 1-15 | |

TECHNICAL FIELDS
SEARCHED      (IPC)

G06F

The present search report has been drawn up for all claims

| Place of search | Date of completion of the search | Examiner |
|---|---|---|
| Berlin | 27 April 2018 | Huguet Serra, G |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ......................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 19 9898

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2018

| Patent document cited in search report | | Publication date | Patent family member(s) | | | Publication date |
|---|---|---|---|---|---|---|
| WO 2004042599 | A1 | 21-05-2004 | AT | 382901 | T | 15-01-2008 |
| | | | AU | 2003276291 | A1 | 07-06-2004 |
| | | | CN | 1735880 | A | 15-02-2006 |
| | | | DE | 60318494 | T2 | 15-01-2009 |
| | | | EP | 1576493 | A1 | 21-09-2005 |
| | | | FI | 20021983 | A | 16-07-2004 |
| | | | KR | 20050065672 | A | 29-06-2005 |
| | | | TW | I266233 | B | 11-11-2006 |
| | | | US | 2004148321 | A1 | 29-07-2004 |
| | | | WO | 2004042599 | A1 | 21-05-2004 |
| WO 2004042554 | A1 | 21-05-2004 | AU | 2003279421 | A1 | 07-06-2004 |
| | | | CN | 1735857 | A | 15-02-2006 |
| | | | EP | 1558994 | A1 | 03-08-2005 |
| | | | FI | 20021982 | A | 07-05-2004 |
| | | | KR | 20050084681 | A | 26-08-2005 |
| | | | TW | I235954 | B | 11-07-2005 |
| | | | US | 2004133618 | A1 | 08-07-2004 |
| | | | WO | 2004042554 | A1 | 21-05-2004 |
| US 2008098278 | A1 | 24-04-2008 | KR | 20080029906 | A | 03-04-2008 |
| | | | US | 2008098278 | A1 | 24-04-2008 |

EPO FORM P0459

For more details about this annex : see Official Journal of the European Patent Office, No. 12/82